# EUROPEAN PATENT SPECIFICATION

(11) **EP 0 921 278 B1**
(45) Date of publication and mention of the grant of the patent: **01.09.2004**
(21) Application number: 98923124.6
(22) Date of filing: 04.06.1998
(51) Int. Cl.: F01D 11/00, F01D 9/02, F01D 9/04

(54) **SEALING STRUCTURE FOR FIRST STAGE STATOR BLADE OF GAS TURBINE**
DICHTUNGSSTRUKTUR FÜR STATORSCHAUFEL DER ERSTEN STUFE EINER GASTURBINE
STRUCTURE D'ETANCHEITE POUR AUBE FIXE DU PREMIER ETAGE D'UNE TURBINE A GAZ

(30) Priority: 05.06.1997 JP 14773597
(43) Date of publication of application: 09.06.1999
(73) Proprietor: Mitsubishi Heavy Industries, Ltd., Tokyo 100-8315 (JP)
(72) Inventor: NISHIDA, Miki, Takasago Machinery Works, 2-chome Arai-cho, Hyogo-ken 676-0008 (JP); ICHIRYU, Taku, Takasago Machinery Works, 2-chome Arai-cho, Hyogo-ken 676-0008 (JP); AKAGI, Koichi, Takasago Machinery Works, 2-chome Arai-cho, Hyogo-ken 676-0008 (JP); SHIBATA, Hiroki, Takasago Machinery Works, 2-chome Arai-cho, Hyogo-ken 676-0008 (JP); SAKAGUCHI, Tadakazu, Takasago Machinery Works, 2-chome Arai-cho, Hyogo-ken 676-0008 (JP)
(74) Representative: Henkel, Feiler & Hänzel
(86) International application number: PCT/JP1998/002477
(87) International publication number: WO 1998/055737

(56) References cited:
- JP-A- 2 016 305
- JP-B- 46 037 048
- US-A- 3 909 155
- US-A- 5 839 878

## Description

### TECHNICAL FIELD

The present invention relates to a gas turbine first-stage stator blade sealing structure in which leakage of air is reduced at the stator blade of a gas turbine.

### BACKGROUND ART

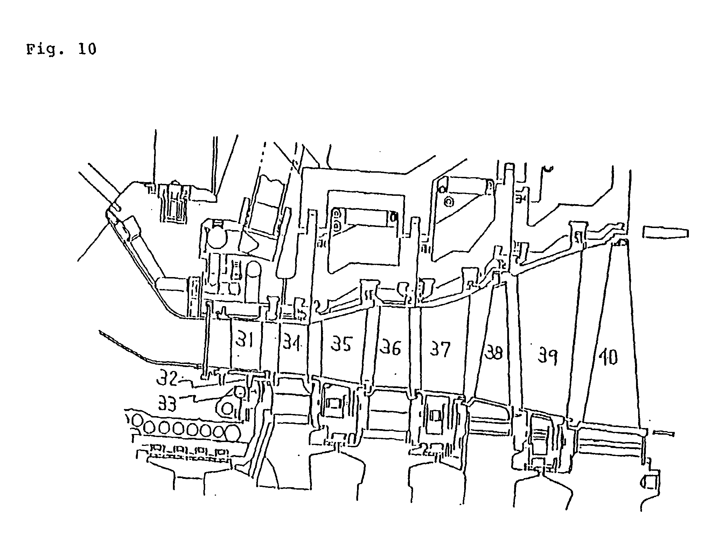

Fig. 10 is a general section showing an arrangement of the blades of a gas turbine. As shown, reference numeral 31 designates a first-stage stator blade, the rear flange 32 of which is fixed in contact with a stator blade support ring 33 arranged in an arcuate shape around the rotor. A plurality of stator blades 31 are arranged in contact with the stator blade support ring 33 around the rotor. Numeral 34 designates a plurality of first-stage moving blades which are arranged on a rotor disc adjacent to the stator blades 31 so that they rotate together with the rotor. Likewise: numeral 35 designates a second-stage stator blade; numeral 36 a second-stage moving blade; numeral 37 a third-stage stator blade; numeral 38 a third-stage moving blade; numeral 39 a fourth-stage stator blade; and numeral 40 a fourth-stage moving blade. What is shown is an example of a four-stage gas turbine which has the stator blades and the moving blades alternately arranged so that the moving blades are rotated by the hot combustion gas.

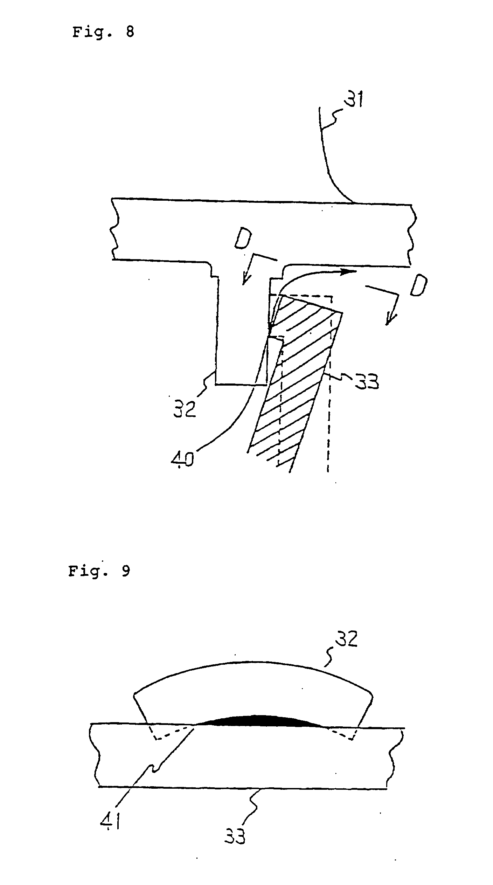

Fig. 8 is a diagram showing details of the first-stage stator blade 31, the rear flange 32 and the stator blade support ring 33 thus far described. While the gas turbine is being run, the stator blade support ring 33 is heated and thermally deformed with the hot working gas so that the rear flange 32 and the stator blade support ring 33 move relative to each other thereby to cause a fall, as shown. Then, the contacting faces partially leave each other, as will be described, to make insufficient the inner seal of the first-stage stator blade 31 so that the sealing air 40 leaks.

Fig. 9 is a view taken in the direction of arrows D - D of Fig. 8. The rear flange 32 is arcuate along the stator blade support ring 33, and they contact with each other in the normal state. Since the stator blade support ring 33 is also circular, however, a crescent clearance is established, as shown, when the blade relatively falls. This clearance is a leakage area 41, through which the sealing air leaks, thereby increasing the flow of leaking air.

In the first-stage stator blade of the gas turbine of the prior art, as described hereinbefore, when the rear flange 32 of the stator blade 31 and the stator blade support ring 33 fall relative to each other due to the thermal stress during the operation, there is established between the contacting faces of the two a clearance, through which the inside sealing air leaks to increase the leakage air. The leakage air is uselessly released, as increased, to the combustion gas to deteriorate the performance of the gas turbine. Therefore, it has been desired to improve the sealing structure of especially the first-stage stator blade.

A prior art gas turbine first-stage stator blade sealing structure with the features of the preamble portion of claim 1 is disclosed in US-A-4 863 343. In this prior art the outer and inner shroud of a stationary blade are respectively provided with radial inward and outward extending projections and straight ridges are respectively provided to the radial surfaces of these extending projections and respectively contact forward radial surfaces of an inner casing and a stationary circumferential inner liner. The ridges in this sealing structure have a curved outer surface for contact with the forward radial surfaces of the inner liner and the inner casing, respectively.

US-A-3 909 155 discloses another gas turbine stator blade sealing structure in which a vane assembly is supported by two ring members at inner and outer positions. The inner shroud of the vane assembly has a radially extending flange positioned in a slot defined by the inner ring support member and the flange is chamfered so as to allow the vane assembly to tilt the base of the flange in the slot. This chamfered portion provides the effect that the lower end of the flange of the blades does not collide with the side wall of the slot.

### DISCLOSURE OF THE INVENTION

Therefore, a fundamental object of the invention is to provide a gas turbine first-stage stator blade sealing structure in which a structure of the contacting portions between the flange of a first-stage stator blade and the stator blade support ring is devised to eliminate the aforementioned leakage of the sealing air so that no clearance may be established between the contacting faces of the two even if they incline relative to each other due to the thermal stress, thereby to prevent the sealing air from leaking from the inside to the outside.

In order to achieve the above-specified object, according to the invention, a gas turbine first-stage stator blade sealing structure comprising the features of claim 1 is provided.

According to the invention, when the stator blade flange and the stator blade support ring deform relative to each other due to the thermal deformation during the operation of the gas turbine so that the blade inclines, the side face of the stator blade support ring is in contact with the upper end or lower end of the ridge, and the ridge is straight, although the flange of the stator blade is arcuate, so that it keeps a linear contact with the side face of the stator blade support ring thereby to establish no clearance. As a result, the sealing faces can be retained without any leakage of the sealing air from the inside of the first-stage stator blade. In the prior art, the two side faces of the arcuate flange and the circular stator blade support ring are in direct contact so that the arcuate clearance is established at the contacting portions, when the two incline relative to each other, thereby to cause the leakage of the sealing air. According to the invention, however, that clearance is not established so that the air leakage can be prevented.

### BRIEF DESCRIPTION OF DRAWINGS

Fig. 1 is a side elevation of a gas turbine first-stage stator blade sealing structure according to an embodiment of the invention;
Fig. 2 is a view taken in the direction of arrows A - A of Fig. 1;
Fig. 3 is a side elevation showing the gas turbine first-stage stator blade sealing structure according to the embodiment of the invention and explains the action of the same;
Fig. 4 is a side elevation of a gas turbine first-stage stator blade sealing structure according to a second mode;
Fig. 5 is a view taken in the direction of arrows B - B of Fig. 4;
Fig. 6 is a view taken in the direction of arrows C - C of Fig. 4;
Fig. 7 is a side elevation showing the gas turbine first-stage stator blade sealing structure according to the second mode and explains the action of the same;
Fig. 8 is a side elevation of a gas turbine first-stage stator blade sealing structure of the prior art;
Fig. 9 is a view taken in the direction of arrows D - D of Fig. 8; and
Fig. 10 is a side elevation of the inside of a general gas turbine of the prior art.

### BEST MODE FOR CARRYING OUT THE INVENTION

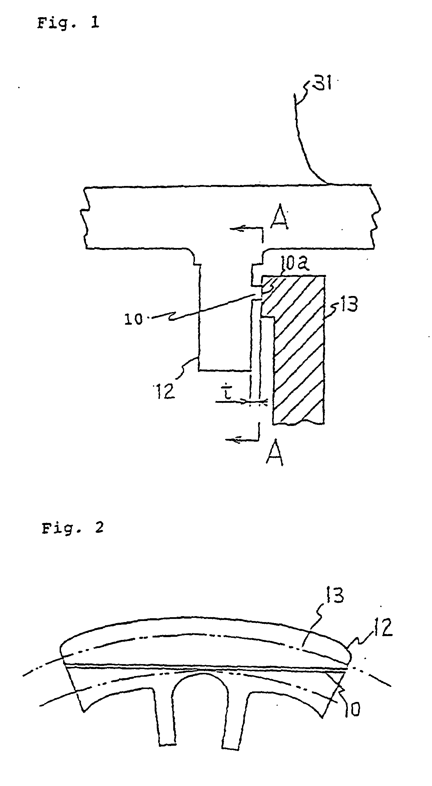

An embodiment of the invention will be specifically described with reference to the accompanying drawings. Fig. 1 is a side elevation of a gas turbine first-stage stator blade sealing structure according to an embodiment of the invention, and Fig. 2 is a view taken in the direction of arrows A - A of Fig. 1. In these two figures, a rear flange 12 of a first-stage stator blade 31 is formed into an arcuate shape along the circular shape of a stator blade support ring 13 and is provided on its side face with a straight rib 10.

The rib 10 is formed straight on the arcuate rear flange 12, as shown in Fig. 2, and its thickness t is determined depending upon the relative blade fall due to the thermal deformation between the rear flange 12 and the stator blade support ring 13. In this embodiment, the thickness t is set at about 2 mm and may be at least about 2 mm considering the maximum fall due to the thermal deformation. The stator blade support ring 13 contacts to retain the horizontal sealing face 10a of the rib 10.

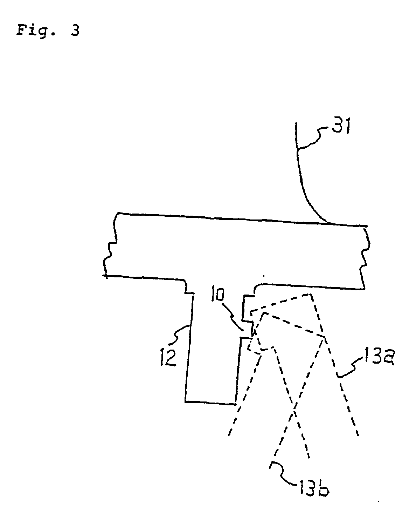

Fig. 3 is a diagram of the case in which a relative fall occurs due to the thermal stress between the rear flange 12 and the stator blade support ring 13 in the sealing structure of the embodiment. As shown in dotted lines, the stator blade support ring 13 is relatively inclined leftward, as indicated by 13a, or rightward, as indicated by 13b. Even if the stator blade support ring 13 is inclined, as indicated by 13a or 13b, it still contacts with the upper end or lower end of the rib 10. In this case, the rib 10 is mounted straight, as shown in Fig. 2, so that the sealing face 10a and the stator blade support ring 13 are held in straight contact on the horizontal line to retain the sealing face without any clearance.

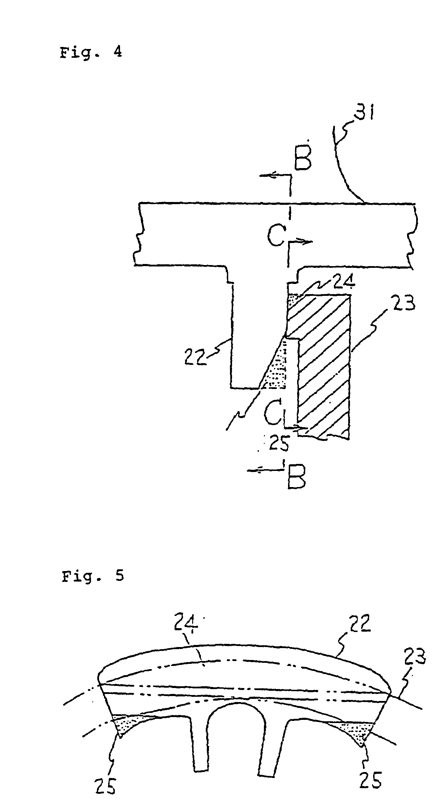

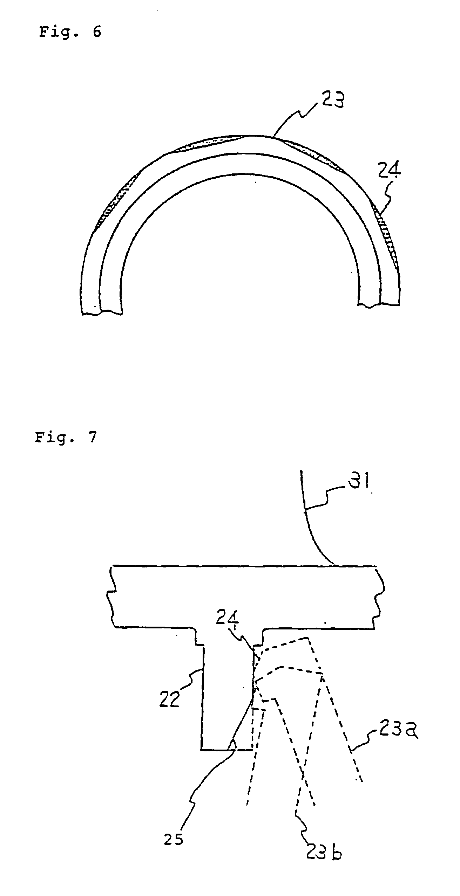

Fig. 4 is a side elevation of a gas turbine first-stage stator blade sealing structure according to a second mode; Fig. 5 is a view taken in the direction of arrows B - B of Fig. 4; and Fig. 6 is a view taken in the direction of arrows C - C of Fig. 4. In this second mode, as shown in Fig. 4, a rear flange 22 is cut away at its portions to abut against the lower end portion of a stator blade support ring 23, to form relief portions 25. These relief portions 25 are formed by cutting away the lower end portions of the two sides of the arcuate rear flange 22, as shown in Fig. 5.

Fig. 6 is a view of the stator blade support ring 23, as taken in the direction of arrows C - C. The circumferential end of the circular support ring 23 are cut away at its portions to abut against the rear flange 22 of the stator blade 31, to form relief portions 24. Thus, the relief portions 24 are formed in the stator blade support ring 23 whereas the relief portions 25 are formed in the rear flange 22, so that the contact of the sealing face is retained even when the rear flange 22 and the stator blade support ring 23 fall relative to each other, as will be described hereinafter.

Fig. 7 shows the sealing structure of the second mode, in which the rear flange 22 and the stator blade support ring 23 fall relative each other due to the thermal stress. When the stator blade support ring inclines leftward, as indicated by dotted lines 23a, its relief portions 24 abut against the rear flange 22. These relief portions 24 are formed straight, as shown in Figs. 5 and 6, and their abutting portions contact straight closely with the central portion of the face of the arcuate rear flange 22 so that the sealing face is retained with no clearance.

When the stator blade support ring 23 inclines rightward, as indicated by dotted lines 23b in Fig. 7, the central portion of the stator blade support ring 23 contacts straight with the rear flange 22, as shown in Fig. 5, while avoiding the relief portions 25 at the two end portions, so that an arcuate leakage area 41, as shown in Fig. 9, is not formed. As a result, no clearance is formed between the stator blade support ring 23 and the rear flange 22 thereby to retain the sealing face.

According to the embodiment and second mode thus far described, there is adopted either the sealing structure, in which the rear flange 12 is made by forming the straight rib 10 on the rear flange of the stator blade 31, or the sealing structure in which the rear flange 22 having the relief portions 25 and the stator blade support ring 23 having the relief portions 24 are combined. As a result, even if the first-stage stator blade 31 relatively falls due to the thermal stress, the sealing face can be reliably retained without any clearance on the contacting faces thereby to prevent the sealing air from leaking from the inside.

## Claims

1. A gas turbine first-stage stator blade sealing structure comprising:
a rotor;
a stator blade support ring (13) arranged around said rotor and having a circumferential side face; and
a stator blade (31) including a flange (12) formed into an arcuate shape along the circular shape of the stator blade support ring (13) and having a side face, wherein a straight ridge (10) is provided on said arcuate side face and contacts said circumferential side face of said stator blade support ring (13) to fix said stator blade (31),
**characterized in that** said ridge (10) has a quadrangular cross sectional shape.

2. The gas turbine first-stage stator blade sealing structure of claim 1, wherein the height of said ridge (10) over the side face of the flange (12) is at least about 2mm.

## Patentansprüche

1. Dichtungsstruktur für eine Leitschaufel der ersten Stufe einer Gasturbine, mit:
einem Rotor,
einem Leitschaufel-Halterungsring (13), der um den Rotor herum angeordnet ist und eine Umfangsseitenfläche aufweist, und
einer Leitschaufel (31) mit einem in eine Bogenform entlang der Kreisform des Leitschaufel-Halterungsrings (13) ausgebildeten Flansch (12), der eine Seitenfläche aufweist, wobei ein gerader Steg (10) an der bogenförmigen Seitenfläche vorgesehen ist und mit der Umfangsseitenfläche des Leitschaufel-Halterungsrings (13) in Kontakt steht, um die Leitschaufel (31) zu fixieren,
**dadurch gekennzeichnet, dass** der Steg (10) eine viereckige Querschnittsform aufweist.

2. Dichtungsstruktur für eine Leitschaufel der ersten Stufe einer Gasturbine nach Anspruch 1, wobei die Höhe des Stegs (10) über der Seitenfläche des Flansches (12) mindestens 2 mm beträgt.

## Revendications

1. Structure d'étanchéité pour ailette de stator du premier étage d'une turbine à gaz, comprenant :
un rotor ;
une bague de support (13) d'ailette de stator, disposée autour dudit rotor et possédant une face latérale circonférentielle ; et
une ailette de stator (31) comportant un rebord (12) formé en une forme arquée qui suit la forme circulaire de la bague de support (13) de l'ailette de stator et possédant une face latérale, où une arête rectiligne (10) est prévue sur ladite face latérale arquée et est en contact avec ladite face latérale circonférentielle de ladite bague de support (13) d'ailette de stator de manière à réaliser la fixation de ladite ailette de stator (31),
**caractérisée en ce que** ladite arête (10) possède une forme quadrangulaire en section droite.

2. Structure d'étanchéité pour ailette de stator de premier étage de turbine à gaz selon la revendication 1, où la hauteur de ladite arête (10) au-dessus de la face latérale du rebord (12) est d'au moins 2 mm environ.
